# EUROPÄISCHE PATENTSCHRIFT

(11) **EP 1 012 943 B1**
(45) Veröffentlichungstag und Bekanntmachung des Hinweises auf die Patenterteilung: **23.11.2005**
(21) Anmeldenummer: 98951279.3
(22) Anmeldetag: 09.09.1998
(51) Int. Cl.: H02J 1/10

(54) **SYSTEM ZUR VERSORGUNG ELEKTROMOTORISCHER VERBRAUCHER MIT ELEKTRISCHER ENERGIE**
SYSTEM FOR SUPPLYING ELECTROMOTIVE CONSUMERS WITH ELECTRIC ENERGY
SYSTEME D'ALIMENTATION EN ENERGIE ELECTRIQUE DE CONSOMMATEURS A MOTEUR ELECTRIQUE

(30) Priorität: 11.09.1997 DE 19739917
(43) Veröffentlichungstag der Anmeldung: 28.06.2000
(73) Patentinhaber: SIEMENS AKTIENGESELLSCHAFT, 80333 München (DE)
(72) Erfinder: RÜTER, Bernd, D-22089 Hamburg (DE); RZADKI, Wolfgang, D-21509 Glinde (DE)
(86) Internationale Anmeldenummer: PCT/DE1998/002664
(87) Internationale Veröffentlichungsnummer: WO 1999/013550

(56) Entgegenhaltungen:
- DE-A- 19 620 444
- DE-C- 3 932 437
- US-A- 5 177 372
- US-A- 5 200 643
- US-A- 5 334 463

## Beschreibung

Die Erfindung betrifft Systeme zur Versorgung elektromotorischer Verbraucher mit elektrischer Energie, beispielsweise über das elektrische Bordnetz eines Schiffes oder Flugzeuges nach Oberbegriff des Anspruchs 1. Gemäß einem besonderen Aspekt können mehrere Stromquellen parallel betrieben werden, beispielsweise mit WechselstromGeneratoren gekoppelte Dieselmotoren oder Gasturbinen (vergleiche Oberbegriff des Anspruchs 4). Weiterhin werden Regelkreise zur Netzstabilisierung und zur Lastaufteilung miteinander gekoppelter Verbraucher vorgeschlagen (vergleiche Oberbegriff des Anspruchs 7).

Bei bekannten Inselnetzen etwa dieser Art handelt es sich um Drehstromnetze mit Synchrongeneratoren. Die Wirkleistungsverteilung erfolgt über die Drehzahl-Frequenzstatik der Drehzahlregler der Dieselmotoren oder Turbinenantriebe. Die Blindlastverteilung erfolgt über die Spannungsstatik der Generator-Spannungsregler. Wegen Statikeinrichtungen sowie Lastaufteilung bei Parallelbetrieb zweier Generatoren wird als Fundstelle auf die technische Informationsschrift ASI NMA/TNG3 der Siemens AG mit dem Titel "THYRIPART-Erregung in bürstenlosen Siemens-Synchrongeneratoren" von Joachim Frauenhofer verwiesen; diese Fundstelle wird hiermit vollinhaltlich einbezogen bzw. für die nachfolgenden Ausführungen vorausgesetzt.

Bei Drehstrom-Inselnetzen ist es bekannt, für die Lastaufteilung von parallel arbeitenden Generatoren aus dem Ausgangsstrom des Generators für den Soll-/Istwert-Vergleichseingang eines Spannungsreglers einen Zusatz-Spannungswert zu generieren, der die Generatorspannung proportional mit ansteigendem Blindstrom absinken läßt. Dies setzt allerdings voraus, daß die Generatorspannung von einer separaten Funktionskomponente aus extern beeinflußbar ist. Solche in ihrer Spannung steuer- oder regelbaren Gleich- oder Drehstromgeneratoren haben allerdings voluminöse Bauformen, ein hohes Gewicht sowie eine aufwendige Herstellung zum Nachteil. Mithin ergibt sich ein beachtliches Bedürfnis nach in sich autarken Energieerzeugungs- und Stromversorgungs-Inselnetzen, die sich durch eine geringe und kompakte Baugröße sowie ein geringes Gewicht, insbesondere was die elektrischen Generatoren angeht, auszeichnen.

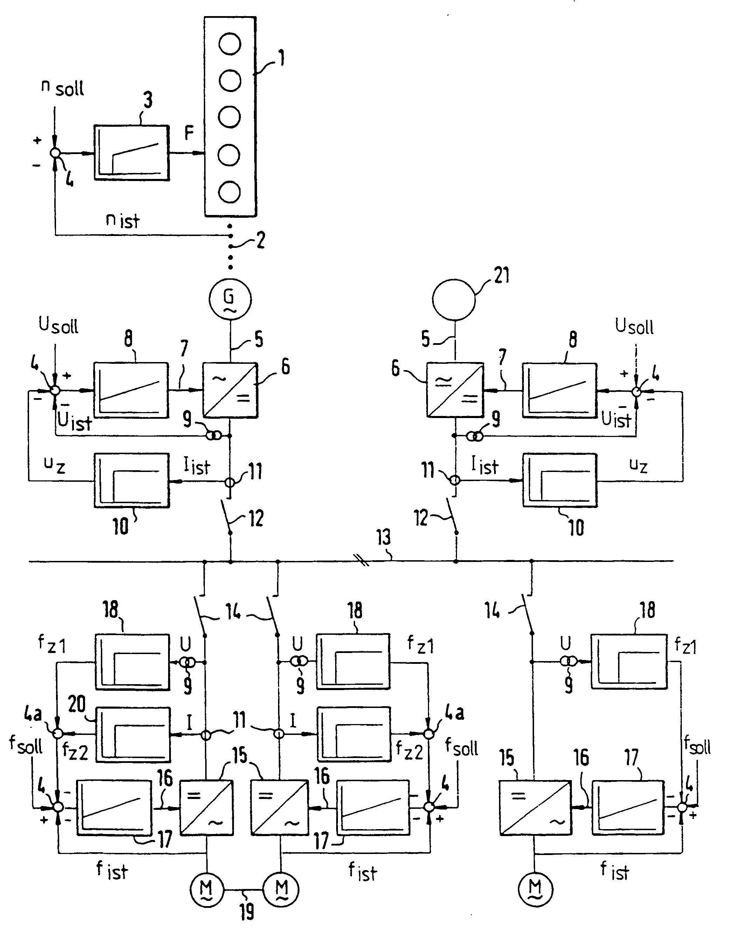

US-A-5 200 643 offenbart (vgl. Spalte 2, Zeilen 11 - 23 und Spalte 4, Zeile 52 - Spalte 5, Zeile 7 und Figur 1) ein Stromversorgungsnetz mit mehreren Gleichstromversorgungsquellen, die in Verstärker einspeisen, welche Steuereingänge aufweisen, wobei Signale für die Ausgangs-Ist-Spannung und den Ausgangs-Ist-Strom mit einem Referenzsignal kombiniert werden (vgl. Figur 1, Bezugszeichen 32). Dadurch soll ein Signal für die Regelabweichung erhalten werden, wobei die Ausgangsspannung jeder Quelle geregelt wird.

Ein Stand der Technik entsprechend dem jeweiligen ersten Teil/Oberbegriff der unabhängigen Patentansprüche 1, 4 und 7 ergibt sich aus US-A-5 334 436 (vgl. dort insbesondere Figur 1). Allerdings ist bei der Parallelschaltung mehrerer Quellen ohne übergeordnete Regeleinrichtung eine gewollte Lastaufteilung nicht ausreichend zu erzielen sowie eine Netzstabilität nicht befriedigend zu gewährleisten.

Zur Beseitigung der sich aus dem oben erläuterten Stand der Technik ergebenden Nachteile bzw. zur Lösung der entsprechenden Probleme wird erfindungsgemäß das im Patentanspruch 1 gekennzeichnete Energieerzeugungssystem, das im Patentanspruch 4 gekennzeichnete Stromversorgungsnetz sowie der im Patentanspruch 7 gekennzeichnete Regelkreis vorgeschlagen.

Weitere vorteilhafte Ausgestaltungen ergeben sich aus den abhängigen Ansprüchen.

Die Erfindung sieht daher vor, bei Versorgungsnetzen von Flug- oder Fahrzeugen, insbesondere Schiffen, anstelle eines Drehstrom-Versorgungsnetzes ein Gleichspannungs-Versorgungsnetz zu verwenden, dessen Spannung durch einen steuerbaren Gleichrichter oder einen Gleichspannungssteller geregelt werden kann. Hiermit ist einerseits eine deutliche Gewichtsreduzierung verbunden. Andererseits kann in diesem Netz keinerlei Blindleistung transportiert werden und stellt somit kein Problem dar. Sämtliche Verbraucher können, gegebenenfalls über Stromrichter, an dieses Versorgungsnetz angekoppelt werden.

Es wird erfindungsgemäß von dem Weg der Spannungsregelung direkt über die Erregung der Generatoren abgegangen, und statt dessen ein Gleichrichter, insbesondere ein Transistorgleichrichter, als Stellglied für eine Ausgleichsspannung verwendet. Dabei ist eine Einspeisung von Blindleistung in das Netz vermieden. Die dynamische Netzentlastung kann mit der erfindungsgemäßen Anordnung frei von Blindleistung erfolgen. Es wird ein steuerbarer, spannungsgeregelter Gleichrichter eingesetzt, der aus Wechselstrom eine konstante Ausgangsspannung erzeugen kann. Die Wirklastverteilung kann durch Veränderung, insbesondere Parallelverschiebung der Statikkennlinie bzw. Spannungsstatik für das entsprechende Gleichrichtergerät eingestellt werden.

Mit der Erfindung ist die Möglichkeit eröffnet, einen oder mehrere, jeweils durch Permanentmagnete erregte Wechselspannungsgeneratoren mit kleiner Schwungmasse einzusetzen, denen ein steuerbarer, gepulster Transistorgleichrichter nachgeschaltet ist. Insbesondere wenn Synchronmaschinen mit Permanentmagneterregung auf dem Läufer eingesetzt werden, läßt sich die Generator-Baugröße erheblich verkleinern. Die Generatoren werden z.B. von hoch aufgeladenen Viertakt-Dieselmotoren angetrieben. Diese können nur so schnell Last übernehmen wie das durch den Abgasturbolader gelieferte Ladeluftvolumen ansteigt.

Nach einer weiteren Ausbildung der Erfindung, die von in ihrer Geschwindigkeit oder Drehzahl geregelten Energiequellen ausgeht, wird dazu ein Regler mit Proportional-Integral-Charakteristik vorgeschlagen. Damit kann eine beispielsweise für Dieselmotor eingestellte Drehzahl genau eingehalten werden.

Mit dem Verfahren zur Lastverteilung, auf das das genannte, erfindungsgemäße System basiert, stellt sich eine Spannungsstatik ein, die eine gewünschte Lastverteilung bewirkt, indem aus dem Ausgangsstrom des Generators ein Zusatz-Spannungswert für den Soll-/Istwert-Eingang des Spannungsreglers erzeugt wird, der die Spannung proportional mit ansteigendem Gleichrichter-Ausgangsstrom absinken läßt. Diese Spannungsstatik wird jedem Erzeugeraggregat aus beispielsweise Dieselmotor, Generator und Gleichrichter abhängig von seinem Leistungsvermögen individuell zugeordnet. Eine übergeordnete Einrichtung zur Lastverteilung ist nicht erforderlich.

Eine Parallelverschiebung der Statikkennlinie bewirkt eine gegebenenfalls gewollte, unterschiedliche Lastverteilung. Dies ist erforderlich, um die Generatoren parallel zu schalten, damit ein Lastsprung an der Antriebsmaschine, dem Dieselmotor oder einer sonstigen Energiequelle vermieden wird. Damit ist eine manuelle Steuerung des Parallelbetriebes von zwei oder mehr Generatoren möglich.

Wenn ein erfindungsgemäßes System bzw. Inselnetz überwiegend mit drehzahlgeregelten Antrieben belastet wird, so wird ein Laststoß ungemindert über die Generatoren an die Dieselmotoren als kinetische Energiequellen weitergeleitet. Ein Dieselmotor kann diesen Laststoß zunächst nur mit der kinetischen Energie seiner Schwungmasse und der Schwungmasse des Generators übernehmen und dann mittels seines Drehzahlreglers soviel Last, wie an Verbrennungsluftüberschuß vorhanden ist, übernehmen. Ist der Laststoß größer als das momentane Vermögen, Last zu übernehmen, sinkt die Dieseldrehzahl und damit das Leistungsvermögen des Dieselmotors als Energiequelle. Diese wird abgewürgt, und das Netz bricht zusammen.

Bei einem bekannten Drehstrominselnetz mit Drehstrommotoren als Belastung führt ein Laststoß zur Senkung der Drehzahl des Dieselmotors und damit der Frequenz. Damit wird eine Verminderung der allgemeinen Inselnetzbelastung je nach Lastkennlinie der Arbeitsmaschine erreicht, und das Netz nimmt weniger .Leistung auf und wird dadurch stabilisiert.

Demgegenüber liegt der Erfindung das Problem zugrunde, ein entsprechendes Stabilisierungsverhalten für Energieerzeugungs- und Stromversorgungssysteme erreichen zu können, bei denen als Stromversorgungs-Netz eine Gleichspannungsschiene angeordnet ist.

Mit dem erfindungsgemäßen Stromversorgungsnetz wird der Vorteil erzielt, daß das Netz, auch wenn es Gleichspannung liefert, sich in gleicher Qualität wie beim bekannten Drehstrom-Inselnetz stabilisieren läßt. Es wird also für die Netzstabilisierung aus der Eingangsspannung der Antriebe bzw. Verbraucher ein Zusatzwert für den Soll-/Istwerteingang des Drehzahlreglers des jeweiligen Antriebes bzw. Verbrauchers erzeugt, der die Drehzahl proportional mit bzw. entsprechend der sinkenden Netzspannung absinken läßt.

Zu diesem Zweck ist ein Frequenz-/Drehzahlregler von Vorteil, in dem eine Übertragungsfunktion mit Proportional-Integral-Charakteristik implementiert ist.

Zur Ableitung des genannten Zusatz-Frequenzsignalwertes ist die Anordnung eines Frequenzstatikgliedes und/oder eines Spannungswandlers zweckmäßig, der an seinem Eingang mit der Wechselrichter-Eingangsspannung und/oder Netzspannung und an seinem Ausgang mit dem Eingang des Frequenz-/Drehzahlreglers verbunden ist. Als Übertragungsfunktion oder -charakteristik für das Frequenzstatikglied bzw. den Frequenzwandler eignet sich Proportionalverhalten.

Bei Inselnetzen ist es wünschenswert, daß elektromotorische Verbraucher, die über eine elektrische oder mechanische Welle miteinander gekoppelt sind, oder daß Elektromotoren-Umformer, die lastseitig parallel geschalten sind, sich die Last proportional zu ihrer Nennleistung teilen. Dazu ist es bei Drehstrom-Inselnetzen bekannt, daß sich Asynchronmotoren mit Umformer die gemeinsame Last aufgrund ihrer Schlupfkennlinie selbsttätig aufteilen.

Mit dem erfindungsgemäßen Regelkreis läßt sich bei Inselnetzen mit gekoppelten Lasten, die von einem Gleichspannungsnetz aus versorgt werden, die genannte Lastverteilung in gleichartiger Weise erreichen zu können.

Für die Lastverteilung von Antrieben oder die letzteren ansteuernden Umformern, die auf der Lastseite gekoppelt sind, wird aus der Eingangsleistung ein Zusatz-Frequenzsignalwert für den Frequenz- oder Drehzahlregler erzeugt, der die Frequenz oder Drehzahl mit steigendem Eingangsstrom oder steigender Eingangsleistung sinken läßt.

Mit Vorteil wird zur Ableitung des Frequenz- oder Drehzahl-Zusatz-Signalwerts ein Frequenzstatikmodul bzw. -glied und/oder Strom-/Spannungs-Wandler so angeordnet, daß diese eingangsseitig mit dem Eingangsstrom des Wechselrichters und an ihren Ausgängen mit dem Eingang des Frequenz-/Drehzahlreglers verbunden sind. Als Übertragungscharakteristik für die Frequenzstatik oder den Strom-/Frequenzwandler eignet sich proportionales Verhalten.

Die oben beschriebenen Zusatz-Signalwerte dienen zum Stabilisieren dynamischer Vorgänge. Sie erlauben einen Parallelbetrieb ohne eine übergeordnete Regelung. Damit läßt sich im Zusammenhang mit der Gleichstromversorgung ebenfalls das Verhalten erzielen, wie man es von herkömmlichen Inselnetzen mit Dieselgeneratoren und Lastaufteilung über die Drehzahlstatik der Dieselmotoren kennt. Sollten statisch die beschriebenen Reglereingriffe unerwünscht sein, kann durch einen langsamen Ausgleichsregler mittels eines gemeinsamen Zusatzsollwertes für alle Generatoren die Spannung des Inselnetzes wieder auf den gewünschten Wert gebracht werden. Dies kann geschehen, sobald die Diesel die dazu nötige Leistung wieder zur Verfügung stellen können. Über Zusatzsollwerte läßt sich auch eine andere als eine proportionale Lastverteilung bewirken.

Mit der Erfindung wird der neuartige Weg eines Gleichspannungs-Inselnetzes mit Wechselstromgeneratoren, steuerbaren Gleichrichtern und Wechselstromantrieben eingeschlagen, die über drehzahlgeregelte Wechselrichter betrieben werden. Damit lassen sich die Lastverteilung und die Netzstabilisierung wie bei einem bekannten Drehstrom-Inselnetz ermöglichen.

Weitere Einzelheiten, Merkmale, Vorteile und Wirkungen auf der Basis der Erfindung ergeben sich aus den Patentansprüchen sowie der nachfolgenden Beschreibung eines bevorzugten Ausführungsbeispiels der Erfindung anhand des beigefügten, schematischen Blockschaltbildes.

Das erfindungsgemäße Gleichspannungs-Inselnetz besitzt eine erste kinetische Energiequelle 1, beispielsweise einen Dieselmotor, der in der Drehzahl in weiten Bereichen variabel sein kann. Über eine (schematisch mit Punkten angedeutete) Abtriebswelle 2 treibt er einen eigens zugeordneten Wechselstromgenerator G an, der vorzugsweise von Permanentmagneten erregt ist. Die Energiequelle 1 ist in ihrer Drehzahl mittels eines PI-Reglers 3 geregelt, der an seinem Ausgang eine Regel- bzw. Leitgröße beispielsweise für eine Kraftstoffüllung F des Dieselmotors 1 als Energiequelle ausgibt. An der Abtriebswelle 2 wird der Drehzahlwert nᵢₛₜ abgetastet und einem Summierglied 4 zugeführt, in welchem der Drehzahlistwert nᵢₛₜ mit einem Drehzahlsollwert nₛₒₗₗ verglichen wird. Die Regeldifferenz wird dann dem Eingang des PI-Reglers zugeführt.

Parallel zu diesem Stromerzeugungsaggregat sind eines oder mehrere, weitere Stromerzeugungseinheiten 21 vorgesehen. Hierbei kann es sich bspw. um ein baugleiches Dieselaggregat, aber auch um ein Aggregat mit unterschiedlicher Leistung oder auch um völlig andere Stromerzeugungseinheiten wie bspw. Brennstoffzellen handeln. An dem Ausgang des Stromgenerators 21 kann sowohl eine Wechselspannung wie bei einem Dieselaggregat, aber auch eine Gleichspannung, wie bspw. bei einer Brennstoffzelle, geliefert werden.

Die Ausgangsstränge oder -phasen 5 der Generatoren G, 21 sind mit den Eingängen jeweiliger Gleichrichtergeräte oder Gleichspannungssteller 6 verbunden. Diese besitzen jeweils einen Spannungssteuereingang 7, über den sich die betreffende Ausgangsspannung einstellen läßt. Dies erfolgt im vorliegenden Fall über jeweilige Spannungsregler 8, die an ihren Eingängen einen Spannungssollwert uₛₒₗₗ mit einem Spannungs-Istwert uᵢₛₜ und einem Zusatzspannungswert u_{z} vornehmen. Der Spannungsistwert wird über einen mit dem Gleichrichter- bzw. Gleichspannungssteller-Ausgang verbundenen Spannungswandler 9, und der Zusatz-Spannungswert über ein Spannungsstatikglied 10 gewonnen, dessen Eingang von einem Stromwandler 11 gespeist ist. Letzterer ist ebenfalls mit dem Gleichrichter-Ausgang direkt verbunden. Der Verbindungsstelle mit den Stromwandlern 11 nachgeschaltet sind Schaltglieder 12, die jeweils zu einer gemeinsamen Gleichspannungsschiene 13 führen.

An dieser Schiene 13 sind über weitere Schaltglieder 14 und diesen nachgeschaltete Wechselrichter 15 elektromotorische Verbraucher M parallel angekoppelt. Die Ausgangsfrequenz der Wechselrichter 15 läßt sich über einen gesonderten Frequenz-Steuereingang 16 von einer externen Funktionskomponente, im vorliegenden Fall ein Frequenz-/Drehzahlregler 17, einstellen. Dessen Summierglied 4 wird - ebenfalls wie bei dem oben genannten Spannungsregler 8 oder PI-Regler 3 - der Frequenz-Sollwert fₛₒₗₗ extern zugeführt. Der Frequenz-Istwert fᵢₛₜ wird unmittelbar von der Verbindung zwischen dem Wechselrichter-Ausgang und dem Eingang des jeweiligen, elektromotorischen Verbrauchers M abgegriffen.

Wie die Beschaltung des rechten Verbrauchers M gemäß Zeichnung erkennen läßt, ist dem Summierglied 4 des jeweiligen Frequenzreglers 17 zusätzlich - als ein weiterer Soll- oder Istwert - der Ausgang eines der Netzstabilisierung dienenden Frequenzstatikgliedes 18 mit dem Zusatz-Frequenzausgangssignal f_{z1} zugeführt. Das Eingangssignal für das Netzstabilisierungs-Frequenzstatikglied 18 wird aus einem Spannungswandler 9 gewonnen, dessen Eingang unmittelbar mit der Gleichspannungsschiene 13 verbunden ist.

Soweit die elektromotorischen Verbraucher M über eine elektrische oder mechanische Welle gekoppelt sind gemäß (schematisch gezeichneter) Kopplungsverbindung 19, wird noch von einem jeweils angeordneten weiteren Frequenzstatikglied 20 für die Lastverteilung Gebrauch gemacht. Das Lastverteilungs-Frequenzstatikglied 20 ist eingangsseitig mit einem jeweiligen Stromwandler 11 verbunden, der aus der mit der Gleichspannungsschiene 13 gekoppelten Zuleitung des betreffenden Wechselrichters 15 einen Stromeingangswert für das Frequenzstatikglied erzeugt. Dieses bildet daraus gemäß Ausführungsbeispiel mit einer P-Übertragungscharakteristik ein zweites Zusatz-Frequenzausgangssignal f_{z2}, das bezüglich der miteinander in Kopplungsverbindung 19 stehenden Verbraucher M jeweils in einem gesonderten Summierglied 4a mit dem oben genannten ersten Zusatz-Frequenzausgangssignal f_{z1} aus dem Netzstabilisierungs-Frequenzstatikglied 18 verknüpft wird. Das Verknüpfungsergebnis wird dann dem Soll-/Istwert-Vergleichseingang bzw. entsprechenden Summierglied 4 des jeweiligen Frequenzreglers 17 eingegeben. Dieser bildet daraus eine Regelgröße für den separaten Frequenz-Steuereingang 16 des jeweiligen Wechselrichters 15, woraus sich eine Regelung mit kombinierter Netzstabilisierung und gewünschter Lastverteilung ergibt.

## Patentansprüche

1. System zur Erzeugung elektrischer Energie zwecks Versorgung vorzugsweise elektromotorischer Verbraucher (M), beispielsweise in einem Schiff, mit mehreren parallel arbeitenden Stromaggregaten (1-4,G; 21), vorzugsweise in Form von Quellen (1) kinetischer Energie wie Dieselmotoren und daran gekoppelten Wechselstrom-Generatoren (G), oder in Form von Brennstoffzellen mit Gleichspannungsausgang, die über ihren jeweiligen Ausgang ggf. nach Stromumformung ein Stromversorgungs-Netz (13) für die Verbraucher parallel speisen, wobei dem Stromausgang (5) jedes Aggregats (1-4,G; 21) ein steuerbarer Gleichrichter oder ein Gleichspannungssteller (6) nachgeschaltet ist, der einen Steuereingang (7) zum Anschluß eines Spannungsreglers (8) aufweist, und dessen Ausgang mit dem Eingang des Spannungsreglers (8) zur Zuführung eines Spannungs-Istwert-Signals (uᵢₛₜ) gekoppelt und mit dem Netz (13) zu dessen Speisung verbunden ist, **dadurch gekennzeichnet, daß** der Ausgang mit einem Zusatz-Signal (u_{z}) gekoppelt ist, das zwecks gewünschter, vorzugsweise symmetrischer Aufteilung der Gesamtlast auf die Stromaggregate (1-4,G; 21) derart generiert wird, daß die Speisespannung mit ansteigendem Speisestrom und/oder mit zunehmender, an das Netz abgegebener Leistung abgesenkt wird.

2. System nach Anspruch 1, **dadurch gekennzeichnet, daß** die Wechselspannungs-Generatoren (G) von Permanentmagneten erregt sind.

3. System nach Anspruch 1 oder 2, wobei die kinetische Energiequelle (1) mit einer Regelung für ihre Geschwindigkeit oder Drehzahl versehen ist, **dadurch gekennzeichnet, daß** die Regelung einen Regler (3) mit Proportional-Integral-Charakteristik aufweist.

4. Stromversorgungsnetz (13) für einen oder mehrere, vorzugsweise elektromotorische Verbraucher (M), beispielsweise in einem Schiff, mit einem oder mehreren parallel arbeitenden Stromerzeugungsggregaten, wobei die Verbraucher (M) mit dem Netz (13) jeweils über einen Wechselrichter (15) verbunden sind, insbesondere nach einem der vorangehenden Ansprüche, **dadurch gekennzeichnet, daß** der Wechselrichter (15) über einen Steuereingang (16) von einem Frequenz- und/oder Drehzahlregler (17) kontrollierbar ist, wobei dem Eingang des Frequenz-/Drehzahlreglers (15) neben dem Frequenz- und/oder Drehzahl-Istwert (fᵢₛₜ) des Wechselrichters (15) und dem Frequenz- und/oder Drehzahl-Sollwert (fₛₒₗₗ) zur Stabilisierung des Netzes (13) ein von der Wechselrichter-Eingangsspannung und/oder der Netzspannung (13) abgeleitetes Frequenz- und/oder Drehzahl-Zusatz-Signal (f_{z1}) zugeführt wird, das derart generiert wird, daß die Wechselrichterfrequenz und/oder die Drehzahl des Verbrauchers mit absinkender Netz- und/oder Wechselrichtereingangs-Spannung abgesenkt wird.

5. Netz nach Anspruch 4, **dadurch gekennzeichnet, daß** der Frequenz-/Drehzahlregler (17) mit Proportional-Integral-Übertragungscharakteristik versehen ist.

6. Netz nach Anspruch 4 oder 5, **dadurch gekennzeichnet, daß** zur Ableitung des Frequenzund/oder Drehzahl-Zusatz-Signals (f_{z1}) ein eingangsseitig mit der Wechselrichter-Eingangsspannung und/oder der Netzspannung (13) und ausgangsseitig mit dem Eingang des Frequenz-/Drehzahlreglers (17) verbundenes Frequenzstatikglied (18) und/oder ein Spannungswandler mit proportionaler Übertragungscharakteristik angeordnet ist.

7. Regelkreis für wenigstens zwei, elektrisch und/oder mechanisch miteinander gekoppelte (19) Verbraucher (M), die aus einem oder mehreren Stromnetzen (13) betrieben werden, wobei die Verbraucher (M) mit dem speisenden Netz (13) jeweils über einen Wechselrichter (15) verbunden sind, insbesondere nach einem der vorangehenden Ansprüche, **dadurch gekennzeichnet, daß** der Wechselrichter (15) über einen Steuereingang (16) von einem Frequenz-/Drehzahlregler (17) kontrollierbar ist, wobei dem Eingang des Frequenz-/Drehzahlreglers (17) neben dem Frequenz- und/oder Drehzahl-Istwert (fᵢₛₜ) des Wechselrichters (15) und dem Frequenz- und/oder Drehzahl-Sollwert (fₛₒₗₗ) zur gewünschten, insbesondere symmetrischen Lastverteilung der miteinander gekoppelten (19) Verbraucher (M) ein von dem aus dem Netz (13) in den Wechselrichter (15) fließenden Eingangsstrom (I) oder der betreffenden Leistung abgeleitetes Frequenz- und/oder Drehzahl-Zusatz-Signal (f_{z2}) zugeführt wird, das derart generiert wird, daß die Wechselrichterfrequenz und/oder die Verbraucherdrehzahl mit steigendem Eingangsstrom oder Eingangsleistung des Wechselrichters (15) abgesenkt wird.

8. Regelkreis nach Anspruch 7, **dadurch gekennzeichnet, daß** zur Ableitung des Frequenz- und/oder Drehzahl-Zusatz-Signals (f_{z2}) ein eingangsseitig mit dem Eingangsstrom des Wechselrichters (15) und ausgangsseitig mit dem Eingang des Frequenz-/Drehzahlreglers (17) verbundenes Frequenzstatikmodul (20) und/oder ein Strom-Spannungs-Wandler mit proportionaler Übertragungscharakteristik angeordnet ist.

9. Verwendung eines elektrischen Energieerzeugungssystems nach Anspruch 1 in Schiffen für Antriebseinheiten und sonstige Verbraucher.

## Claims

1. System for producing electrical energy for the purpose of supplying preferably electric-motor loads (M), for example in a ship, having a plurality of electricity generation sets (1-4, G; 21) which operate in parallel, preferably in the form of sources (1) of kinetic energy such as diesel engines and AC generators (G) coupled thereto, or in the form of fuel cells with a DC voltage output which, via their respective output and possibly after electrical conversion, supply, in parallel, a power supply network (13) for the loads, in which case a controllable rectifier or a DC voltage converter (6) is connected downstream of the electricity output (5) of each set (1-4, G; 21) and has a control input (7) for connection of a voltage regulator (8), and whose output is coupled to the input of the voltage regulator (8) in order to supply a voltage actual value signal (u_{act}), and is connected to the network (13) in. order to supply it, **characterized in that** the output is coupled to an additional signal (u_{z}) which is generated for the purpose of desirable, preferably balanced, sharing of the total load between the electricity generation sets (1-4, G; 21) in such a manner that the supply voltage is reduced as the supply current rises and/or as the power emitted to the network increases.

2. System according to Claim 1, **characterized in that** the AC voltage generators (G) are excited by permanent magnets.

3. System according to Claim 1 or 2, in which case the kinetic energy source (1) is provided with regulation for its speed or rotation speed, **characterized in that** the regulation has a regulator (3) with a proportional-integral characteristic.

4. Power supply network (13) for one or more, preferably electric-motor, loads (M), for example in a ship, having one or more electricity generation sets which operate in parallel, in which case the loads (M) are in each case connected to the network (13) via an inverter (15), in particular according to one of the preceding claims, **characterized in that** the inverter (15) can be controlled via a control input (16) by a frequency and/or rotation-speed regulator (17), in which case, in addition to the frequency and/or rotation-speed actual value (f_{act}) of the inverter (15) and the frequency and/or rotation-speed nominal value (fₙₒₘ) for stabilization of the network (13), the input of the frequency/rotation-speed regulator (15) is supplied with a frequency and/or rotation-speed additional signal (f_{z1}) which is derived from the inverter input voltage and/or the network voltage (13) and is generated in such a manner that the inverter frequency and/or the rotation speed of the load is reduced as the network and/or inverter input voltage falls.

5. Network according to Claim 4, **characterized in that** the frequency/rotation-speed regulator (17) is provided with a proportional-integral transmission characteristic.

6. Network according to Claim 4 or 5, **characterized in that** a voltage converter with a proportional transmission characteristic and/or a frequency droop element (18), which is connected on the input side to the inverter input voltage and/or the network voltage (13) and on the output side to the input of the frequency/rotation- speed regulator (17), is arranged in order to derive the frequency and/or rotation-speed additional signal (f_{z1}).

7. Control loop for at least two loads (M) which are electrically and/or mechanically coupled (19) to one another and are operated from one or more power networks (13), in which case the loads (M) are in each case connected to the supplying network (13) via a inverter (15), in particular according to one of the preceding claims, **characterized in that** the inverter (15) can be controlled via a control input (16) by a frequency/rotation-speed regulator (17), in which case, in addition to the frequency and/or rotation-speed actual value (f_{act}) of the inverter (15) and the frequency and/or rotation-speed nominal value (fₙₒₘ) for desirable, in particular balanced, load distribution between the loads (M) which are coupled (19) to one another, the input of the frequency/rotation-speed regulator (17) is supplied with a frequency and/or rotation-speed additional signal (f_{z2}) which is derived from the input current (I) flowing from the network (13) into the inverter (15), or from the relevant power, and is generated in such a manner that the inverter frequency and/or the load rotation speed is reduced as the input current or input power of the inverter (15) rises.

8. Control loop according to Claim 7, **characterized in that** a current/voltage converter with a proportional transmission characteristic and/or a frequency droop module (20), which is connected on the input side to the input current of the inverter (15) and on the output side to the input of the frequency/rotation-speed regulator (17), is arranged in order to derive the frequency and/or rotation-speed additional signal (f_{z2}) .

9. Use of an electrical energy generation system according to Claim 1 in ships, for drive units and other loads.

## Revendications

1. Système de production d'énergie électrique en vue de l'alimentation de consommateurs, de préférence à moteur électrique (M), par exemple dans un bateau, comprenant plusieurs groupes producteurs de courant (1-4, G ; 21) travaillant en parallèle, de préférence sous la forme de sources (1) d'énergie cinétique comme des moteurs diesels et des générateurs de courant alternatifs (G) couplés à ceux-ci ou sous la forme de piles à combustible avec sortie de tension continue, qui alimentent en parallèle par l'intermédiaire de leur sortie respective, éventuellement après transformation du courant, un réseau d'alimentation en courant (13) pour les consommateurs, un redresseur commandable ou un convertisseur direct de tension continue (6), qui comporte une entrée de commande (7) pour le raccordement d'un régulateur de tension (8) et dont la sortie est couplée à l'entrée du régulateur de tension (8) pour l'amenée d'un signal à valeur réelle de tension (uᵢₛₜ) et est reliée au réseau (13) pour l'alimentation de celui-ci, étant branché du côté aval de la sortie de courant (5) de chaque groupe (1-4, G ; 21), **caractérisé par le fait que** la sortie est couplée à un signal supplémentaire (u_{z}) qui est généré de telle sorte, en vue de la répartition souhaitée, de préférence symétrique, de la charge totale sur les groupes producteurs de courant (1-4, G ; 21), que la tension d'alimentation est réduite lorsque le courant d'alimentation augmente et/ou lorsque la puissance fournie au réseau augmente.

2. Système selon la revendication 1, **caractérisé par le fait que** les générateurs de tension alternative (G) sont excités par des aimants permanents.

3. Système selon la revendication 1 ou 2, la source d'énergie cinétique (1) étant munie d'une régulation pour sa vitesse ou sa vitesse de rotation, **caractérisé par le fait que** la régulation comporte un régulateur (3) avec caractéristique proportionnelle-intégrale.

4. Réseau d'alimentation en courant (13) pour un ou plusieurs consommateurs, de préférence à moteur électrique (M), par exemple dans un bateau, comprenant un ou plusieurs groupes producteurs de courant travaillant en parallèle, les consommateurs (M) étant reliés au réseau (13) à chaque fois par l'intermédiaire d'un onduleur (15), notamment selon l'une des revendications précédentes, **caractérisé par le fait que** l'onduleur (15) est contrôlable par l'intermédiaire d'une entrée de commande (16) par un régulateur de fréquence et/ou de vitesse de rotation (17), l'entrée du régulateur de fréquence et/ou de vitesse de rotation (17) recevant outre la valeur réelle de fréquence et/ou de vitesse de rotation (fᵢₛₜ) de l'onduleur (15) et outre la valeur de consigne de fréquence et/ou de vitesse de rotation (fₛₒₗₗ), pour la stabilisation du réseau (13), un signal supplémentaire de fréquence et/ou de vitesse de rotation (f_{z1}) qui est déduit de la tension d'entrée d'onduleur et/ou de la tension de réseau (13) et qui est généré de telle sorte que la fréquence de l'onduleur et/ou la vitesse de rotation du consommateur diminuent lorsque la tension de réseau et/ou d'entrée d'onduleur diminue.

5. Réseau selon la revendication 4, **caractérisé par le fait que** le régulateur de fréquence et/ou de vitesse de rotation (17) est muni d'une caractéristique de transmission proportionnelle-intégrale.

6. Réseau selon la revendication 4 ou 5, **caractérisé par le fait que**, pour déduire le signal supplémentaire de fréquence et/ou de vitesse de rotation (f_{z1}), il est prévu un élément statique de fréquence (18) relié en entrée à la tension d'entrée d'onduleur et/ou à la tension de réseau (13) et en sortie à l'entrée du régulateur de fréquence et/ou de vitesse de rotation (17) et/ou un convertisseur de tension avec caractéristique de transmission proportionnelle.

7. Circuit de régulation pour au moins deux consommateurs (M) qui sont couplés (19) entre eux au niveau électrique et/ou mécanique et qui sont exploités à partir d'un ou plusieurs réseaux de courant (13), les consommateurs (M) étant reliés au réseau d'alimentation (13) à chaque fois par l'intermédiaire d'un onduleur (15), notamment selon l'une des revendications précédentes, **caractérisé par le fait que** l'onduleur (15) est contrôlable par l'intermédiaire d'une entrée de commande (16) par un régulateur de fréquence et/ou de vitesse de rotation (17), l'entrée du régulateur de fréquence et/ou de vitesse de rotation (17) recevant outre la valeur réelle de fréquence et/ou de vitesse de rotation (fᵢₛₜ) de l'onduleur (15) et outre la valeur de consigne de fréquence et/ou de vitesse de rotation (fₛₒₗₗ), pour la répartition de charge souhaitée, notamment symétrique, des consommateurs (M) couplés (19) entre eux, un signal supplémentaire de fréquence et/ou de vitesse de rotation (f_{z2}) qui est déduit du courant d'entrée (I) passant du réseau (13) dans l'onduleur (15) ou de la puissance concernée et qui est généré de telle sorte que la fréquence de l'onduleur et/ou la vitesse de rotation du consommateur diminuent lorsque le courant d'entrée ou la puissance d'entrée de l'onduleur (15) augmente.

8. Circuit de régulation selon la revendication 7, **caractérisé par le fait que**, pour déduire le signal supplémentaire de fréquence et/ou de vitesse de rotation (f_{z2}), il est prévu un module statique de fréquence (20) relié en entrée au courant d'entrée de l'onduleur (15) et en sortie à l'entrée du régulateur de fréquence et/ou de vitesse de rotation (17) et/ou un convertisseur courant-tension avec caractéristique de transmission proportionnelle.

9. Utilisation d'un système producteur d'énergie électrique selon la revendication 1 dans des bateaux pour des unités motrices et pour d'autres consommateurs.
